# FASCICULE DE BREVET EUROPEEN

(11) **EP 3 538 751 B1**
(45) Date de publication et mention de la délivrance du brevet: **15.09.2021**
(21) Numéro de dépôt: 17800919.7
(22) Date de dépôt: 09.11.2017
(51) Int. Cl.: F02C 6/20, F02C 7/32, F02C 7/36

(54) **TURBOPROPULSEUR COMPRENANT UN GÉNÉRATEUR DE GAZ ET UNE BOÎTE D'ACCESSOIRES ACCOUPLÉE À UNE EXTREMITÉ ARRIÈRE D'UN ARBRE HAUTE PRESSION DU GÉNÉRATEUR DE GAZ**
TURBOPROPTRIEBWERK MIT EINEM GASGENERATOR UND EINEM ANBAUGERÄTEGETRIEBE, DAS MIT EINEM HINTEREN ENDE EINER HOCHDRUCKWELLE DES GASGENERATORS GEKOPPELT IST
TURBOPROP ENGINE COMPRISING A GAS GENERATOR AND AN ACCESSORY BOX COUPLED TO A REAR END OF A HIGH PRESSURE SHAFT OF THE GAS GENERATOR

(30) Priorité: 10.11.2016 FR 1660909
(43) Date de publication de la demande: 18.09.2019
(73) Titulaire: Safran Aircraft Engines, 75015 Paris (FR)
(72) Inventeur: EL GHANNAM, Nora, 77550 Moissy-Cramayel (FR); NICQ, Geoffroy, Marie, Gérard, 77550 Moissy-Cramayel (FR); PERRIER, Mathieu, Laurent, Louis, 77550 Moissy-Cramayel (FR)
(74) Mandataire: Brevalex
(86) Numéro de dépôt international: PCT/FR2017/053057
(87) Numéro de publication internationale: WO 2018/087478

(56) Documents cités:
- EP-A2- 2 774 852
- WO-A1-2012/004516
- WO-A1-2015/114265
- US-A- 3 025 025
- US-A1- 2012 128 487

## Description

### DOMAINE TECHNIQUE

L'invention concerne l'intégration d'une boîte d'accessoires à un turbopropulseur à arbre déporté.

### ÉTAT DE LA TECHNIQUE ANTÉRIEURE

Un turbopropulseur est un moteur d'aéronef comprenant une hélice de propulsion non carénée mue par une turbine à gaz appelée générateur de gaz, et dont la poussée est générée uniquement par cette l'hélice.

L'invention concerne l'intégration à un turbopropulseur à arbre déporté d'une boîte d'accessoires, usuellement désignée par l'acronyme AGB (Auxiliaire Géra Box). Une telle boîte d'accessoires comprend au moins une ligne d'engrenages à pignons pour entraîner des accessoires ou équipements additionnels à des vitesses de rotation adaptées à chaque équipement. Ces équipements comprennent typiquement une ou des pompes à huile et à carburant, un démarreur, et un alternateur.

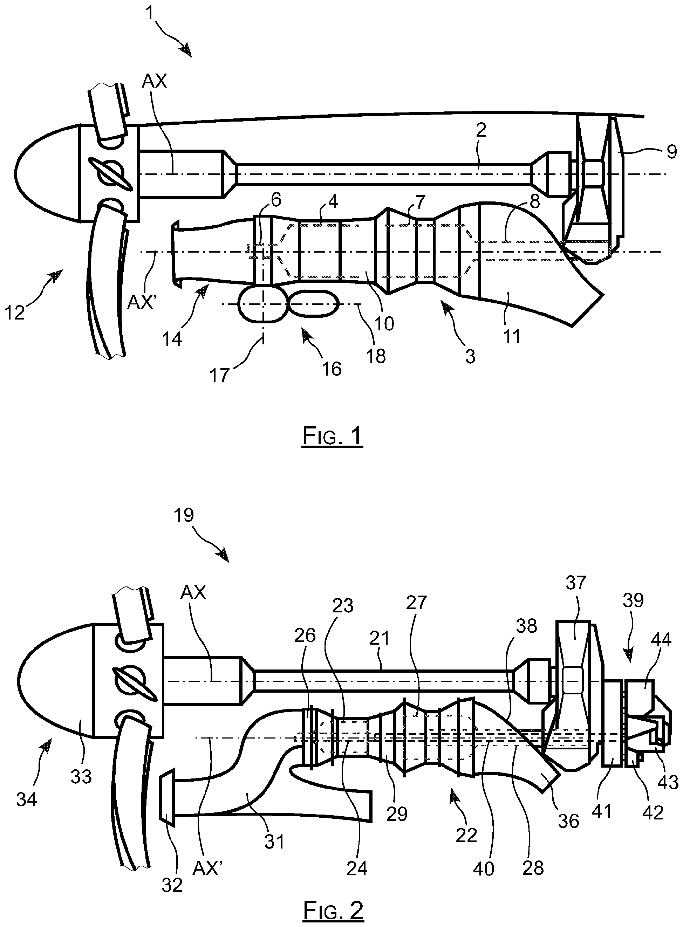

Dans un turbopropulseur à arbre déporté, tel que le turbopropulseur 1 de la figure 1, l'arbre d'hélice 2 s'étend selon un axe longitudinal AX sur toute la longueur du propulseur, et le générateur de gaz 3 s'étend parallèlement à l'arbre d'hélice 2. Le générateur de gaz 3 renferme un corps rotatif haute pression 4 situé dans sa partie avant et se terminant par un arbre dit haute pression 6, ainsi qu'un corps de turbine basse pression 7 situé dans sa partie arrière et qui se termine par un arbre dit basse pression 8.

La turbine basse pression 7 est indépendante en rotation du corps haute pression 4, mais ils tournent tous deux autour d'un même axe AX' parallèle à l'axe AX de l'arbre d'hélice. Cette turbine basse pression 7 dont le régime de rotation est inférieur au régime du corps haute pression, est alimentée par du gaz pressurisé et en phase de détente issu du corps haute pression 4.

Le corps haute pression 4 et le corps basse pression 7 avec leurs arbres tournent autour d'un même axe AX' tout en étant indépendants l'un de l'autre. L'ensemble est entouré par une enveloppe extérieure 10 formée de carters et s'étendant sur la majorité de la longueur du générateur de gaz.

Un réducteur 9 situé à l'arrière du turbopropulseur sont accouplé d'une part à l'arbre basse pression 8 qui traverse une tuyère correspondante 11, et d'autre part à l'extrémité arrière de l'arbre d'hélice 2. Le réducteur 9 sont ainsi situés à l'arrière du turbopropulseur, c'est-à-dire à son extrémité opposée à l'extrémité avant qui comporte l'hélice de propulsion 12.

Comme visible sur la figure 1, l'extrémité avant du générateur de gaz 3 est équipée d'une manche d'entrée d'air 14, sous forme d'une paroi de révolution formée par un carter ou analogue entourant l'arbre haute pression. La boîte d'accessoires, repérée par 16, est accolée à la partie inférieure de l'enveloppe du générateur de gaz et entraînée par l'arbre haute pression 6.

Cet entraînement est assuré par un arbre radial 17 perpendiculaire à l'arbre d'hélice haute pression 6 qui est accouplé à une partie avant de cet arbre par deux pignons coniques non visibles sur la figure. Cet arbre radial 17 traverse la paroi de la manche d'entrée d'air 14 pour être accouplé par son autre extrémité à la boîte d'accessoires 16 au moyen d'un autre accouplement.

Cet autre accouplement est assuré par un autre renvoi d'angle comprenant deux autres pignons coniques pour entraîner un arbre principal 18 de la boîte d'accessoires 16, qui s'étend parallèlement à l'arbre haute pression 6 et à l'arbre d'hélice 2.

Avec l'architecture de la figure 1, la maintenance de la boîte d'accessoires est compliquée par le fait qu'elle est située en partie inférieure du turbopropulseur c'est-à-dire d'une accessibilité malaisée, et qu'elle est entraînée en rotation par deux renvois d'angle à pignons coniques la rendant volumineuse et lourde.

Le but de l'invention est d'apporter une architecture de turbopropulseur dans laquelle la boîte d'accessoires est intégrée de manière à la fois compacte et accessible. Le document US 2012/128487 divulgue un agencement selon le préambule de la revendication 1.

### EXPOSÉ DE L'INVENTION

A cet effet, l'invention a pour objet un turbopropulseur comprenant un arbre d'hélice et un générateur de gaz qui longe cet arbre d'hélice, ce générateur de gaz comprenant un arbre haute pression et un arbre basse pression creux s'étendant l'un et l'autre selon un même axe longitudinal, l'arbre basse pression ayant une extrémité arrière accouplée à une extrémité arrière de l'arbre d'hélice par l'intermédiaire d'un réducteur caractérisé en ce qu'il comporte une boîte d'accessoires accolée au réducteur, et accouplée à l'extrémité arrière de l'arbre haute pression par l'intermédiaire d'un arbre d'entrainement traversant l'arbre basse pression.

Le montage de la boîte d'accessoires fixée à l'arrière du réducteur facilite l'accès en maintenance à la boîte d'accessoires et également aux autres composants du turbopropulseur. Cet agencement permet de plus de réduire la section globale du turbopropulseur pour optimiser sa ligne aérodynamique et sa performance. En outre, le centre de gravité du moteur est ainsi décalé vers l'arrière, ce qui est bénéfique en ce qui concerne sa fixation à l'aile qui le porte.

L'invention a également pour objet un turbopropulseur ainsi défini, dans lequel la boîte d'accessoires est portée par le réducteur.

L'invention a également pour objet un turbopropulseur ainsi défini, dans lequel l'arbre d'entraînement traverse le réducteur et une partie de la boîte d'accessoires pour être extractible par l'arrière du turbopropulseur.

L'invention a également pour objet un turbopropulseur ainsi défini, dans lequel le réducteur comporte un palier portant l'arbre d'entraînement de la boîte à accessoires.

### BRÈVE DESCRIPTION DES DESSINS

La figure 1 déjà décrite est une vue latérale d'un turbopropulseur à arbre déporté de l'état de la technique ;
La figure 2 est une vue latérale d'un turbopropulseur selon l'invention ;
La figure 3 est une vue latérale de détail de l'intégration de la boîte d'accessoires selon l'invention.

### EXPOSÉ DÉTAILLÉ DE MODES DE RÉALISATION PARTICULIERS

L'idée à la base de l'invention est de prévoir, dans une architecture de turbopropulseur à arbre déporté, de monter la boîte d'accessoires à l'arrière du réducteur en l'accouplant à une extrémité arrière de l'arbre haute pression du générateur de gaz. Dans cette configuration, la boîte d'accessoires est facilement accessible pour une opération de maintenance, tout en étant intégrée de manière compacte.

Le turbopropulseur 19 à arbre déporté qui est représenté sur la figure 2 comporte un arbre d'hélice 21 s'étendant selon un axe AX, et un générateur de gaz 22 longeant cet arbre d'hélice 21. Comme visible sur la figure 2, le générateur de gaz 22 a une forme s'étendant longitudinalement, et qui longe l'arbre d'hélice 21 en s'étendant parallèlement à celui-ci à une faible distance de celui-ci. Ce générateur de gaz 22 comporte un corps rotatif haute pression 23 situé dans sa partie avant et se terminant par un arbre dit haute pression 24, ainsi qu'un corps basse pression 27 située dans sa partie arrière qui se termine par un arbre dit basse pression 28. Le corps basse pression 27 qui est indépendant en rotation du corps haute pression 23 est alimenté par du gaz pressurisé et en phase de détente qui est issu du corps haute pression 23.

Le corps haute pression 23 et le corps basse pression 27 avec leurs arbres tournent autour d'un même axe AX' tout en étant indépendants l'un de l'autre, et ils sont situés respectivement en partie avant et en partie arrière du générateur de gaz. L'ensemble est entouré par une enveloppe extérieure 29 formée de carters et s'étendant sur la majorité de la longueur du générateur de gaz.

L'enveloppe 29 est prolongée en partie avant du générateur de gaz 22 par une conduite d'entrée d'air 31 incurvée, comportant une bouche d'admission 32 pour collecter de l'air afin de l'acheminer en entrée du générateur de gaz.

La bouche 32 est située sous le moyeu 33 de l'hélice 34 porté par l'extrémité avant de l'arbre d'hélice 21, pour recevoir un débit d'air suffisant. L'arrière de la conduite 31 est accouplé à l'entrée 26 de l'enveloppe 29, pour approvisionner le générateur de gaz 22 avec l'air collecté par la bouche d'admission 32.

L'extrémité arrière de l'arbre basse pression 28 traverse la paroi d'une tuyère d'échappement 36 qui est raccordée à une extrémité aval de l'enveloppe 29, pour être accouplée à un réducteur 37 auquel est également accouplée l'extrémité arrière de l'arbre d'hélice 21.

L'arbre basse pression 28 entraîne ainsi en rotation l'hélice 34 par l'intermédiaire du réducteur 37, l'hélice 34 tournant à une vitesse démultipliée par rapport à la vitesse de l'arbre basse pression 28.

L'arbre basse pression 28 est un arbre creux qui traverse une ouverture formée dans une portion aval 38 de la paroi de cette tuyère, cette ouverture formant un orifice de passage de mouvement pour transmettre le mouvement de l'arbre 28 au réducteur 37 afin d'entraîner l'hélice.

Une boîte à accessoires 39 est accouplée à l'arbre haute pression 24 par un arbre d'entraînement additionnel 40, dont une extrémité est accouplée à un mécanisme de la boîte à accessoires 39 pour l'entraîner en rotation. Cet arbre d'entraînement 40 traverse le réducteur 37 ainsi que l'arbre bas pression creux 28 et le corps basse pression 27, pour être accouplé à une extrémité arrière de l'arbre haute pression 24. Cette boîte d'accessoires 39 est ainsi située en face d'une extrémité arrière de l'arbre basse pression 28.

Le réducteur 37 comportent avantageusement au niveau de sa paroi arrière 47 qui est traversée par cet arbre d'entraînement, un palier supportant l'arbre d'entraînement non visible sur les dessins.

L'arbre d'entraînement de la boîte d'accessoires 39 traverse toute l'épaisseur du réducteur 37 pour s'étendre à l'intérieur de l'arbre basse pression 28 afin d'être accouplé à une extrémité arrière de l'arbre haute pression 24. Avantageusement, cet arbre d'entraînement peut être extrait par l'arrière du turbo propulseur, à travers le réducteur et la boîte d'accessoires.

Ainsi, et comme visible sur la figure 2, la portion arrière du turbopropulseur comporte successivement selon la direction longitudinale des axes AX et AX', la tuyère d'échappement 36, le réducteur 37, et la boîte d'accessoires 39.

La boîte d'accessoires 39 est ainsi directement accouplée en ligne sur l'axe AX' des arbres haute pression et basse pression à l'arrière du turbopropulseur, c'est-à-dire qu'elle est située en extrémité arrière du turbopropulseur.

Cette boîte d'accessoires 39 qui est accouplée à l'arbre haute pression 24 comporte un carter 41 formant châssis, qui renferme une ligne de pignons, et qui porte un ensemble d'éléments 42, 43, 44 également appelés équipements ou accessoires. Ces accessoires incluent par exemple une ou des pompes à huile et à carburant, un alternateur et éventuellement un démarreur pour entraîner l'arbre haute pression 24 lorsque le moteur doit être démarré. Ces différents éléments 42, 43, 44 sont entraînés en rotation à des vitesses différentes par la pignonnerie.

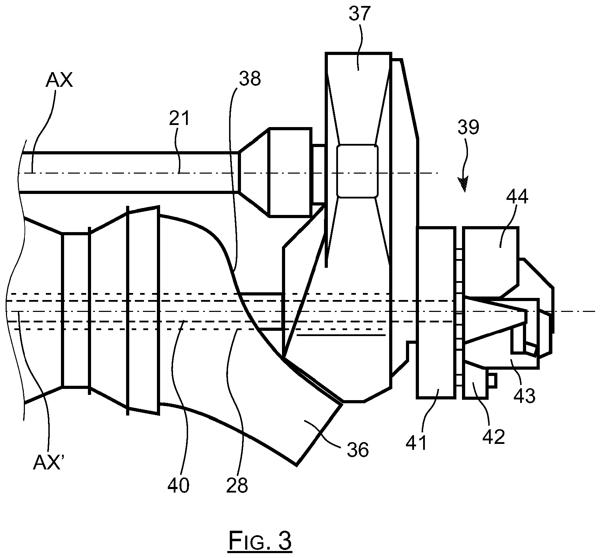

Comme visible plus clairement sur la figure 3, la boîte d'accessoires 39 est portée par le réducteur 37 en étant ici fixée à une face arrière 47 de ce réducteur, cette face arrière s'étendant sensiblement perpendiculairement à l'axe AX de l'hélice. Par ailleurs, l'arbre d'entrainement 40 traverse avantageusement le réducteur 37 et éventuellement une partie de la boîte d'accessoires 39 pour être extractible depuis l'arrière du turbopropulseur.

## Revendications

1. Turbopropulseur (19) comprenant un arbre d'hélice (21) et un générateur de gaz (22) qui longe cet arbre d'hélice (21), ce générateur de gaz (22) comprenant un arbre haute pression (24) et un arbre basse pression creux (28) s'étendant l'un et l'autre selon un même axe longitudinal (AX'), l'arbre basse pression (28) ayant une extrémité arrière accouplée à une extrémité arrière de l'arbre d'hélice (21) par l'intermédiaire d'un réducteur (37) **caractérisé en ce qu'**il comporte une boîte d'accessoires (39) accolée au réducteur (37), et accouplée à l'extrémité arrière de l'arbre haute pression (24) par l'intermédiaire d'un arbre d'entrainement (40) traversant l'arbre basse pression (28).

2. Turbopropulseur selon la revendication 1, dans lequel la boîte d'accessoires (39) est portée par le réducteur (37).

3. Turbopropulseur selon la revendication 1 ou 2, dans lequel l'arbre d'entraînement (40) est extractible par l'arrière du turbopropulseur.

4. Turbopropulseurs selon la revendication 3, dans lequel le réducteur (37) comporte un palier portant l'arbre d'entraînement de la boîte à accessoires (39).

## Patentansprüche

1. Turboproptriebwerk (19) mit einer Schraubenwelle (21) und einem Gasgenerator (22), der an der Schraubenwelle (21) entlang verläuft, wobei der Gasgenerator (22) eine Hochdruckwelle (24) und eine hohle Niederdruckwelle (28) aufweist, welche sich entlang der gleichen Längsachse (AX') erstrecken, wobei die Niederdruckwelle (28) ein hinteres Ende aufweist, das über ein Untersetzungsgetriebe (37) mit einem hinteren Ende der Schraubenwelle (21) gekoppelt ist, **dadurch gekennzeichnet, dass** er ein Anbaugerätegetriebe (39) aufweist, das an das Untersetzungsgetriebe (37) angefügt und über eine Antriebswelle (40), die die Niederdruckwelle (28) durchsetzt, mit dem hinteren Ende der Hochdruckwelle (24) gekoppelt ist.

2. Turboproptriebwerk nach Anspruch 1, wobei das Anbaugerätegetriebe (39) von dem Untersetzungsgetriebe (37) getragen wird.

3. Turboproptriebwerk nach Anspruch 1 oder 2, wobei die Antriebswelle (40) von der Rückseite des Turboproptriebwerks abnehmbar ist.

4. Turboproptriebwerk nach Anspruch 3, wobei das Untersetzungsgetriebe (37) ein Lager aufweist, das die Antriebswelle des Anbaugerätegetriebes (39) trägt.

## Claims

1. A turboprop (19) comprising a propeller shaft (21) and a gas generator (22) running along said propeller shaft (21), this gas generator (22) comprising a high-pressure shaft (24) and a hollow low-pressure shaft (28) both extending along the same longitudinal axis (AX'), the low-pressure shaft (28) having a rear end coupled to a rear end of the propeller shaft (21) via a reducer (37) **characterized in that** it includes an accessory box (39) contiguous to the reducer (37), and coupled to the rear end of the high-pressure shaft (24) via a drive shaft (40) passing through the low-pressure shaft (28).

2. The turboprop according to claim 1, wherein the accessory box (39) is carried by the reducer (37).

3. The turboprop according to claim 1 or 2, wherein the drive shaft (40) is extractable from the rear of the turboprop.

4. The turboprop according to claim 3, wherein the reducer (37) includes a bearing carrying the accessory box (39) drive shaft.
